Europäisches Patentamt

European Patent Office

Office européen des brevets

(11) Publication number: **0 101 322**
**A2**

(12) **EUROPEAN PATENT APPLICATION**

(21) Application number: 83304742.6

(22) Date of filing: 16.08.83

(51) Int. Cl.³: **B 60 J 7/20**
**B 60 J 7/04**

(30) Priority: 17.08.82 GB 8223634

(43) Date of publication of application:
22.02.84 Bulletin 84/8

(84) Designated Contracting States:
DE FR GB IT NL SE

(71) Applicant: MGA DEVELOPMENTS LIMITED
22, St. Andrews Street
London Ec4 3AN(GB)

(72) Inventor: Gibbs, Michael William
145-155 Ewell Road
Surbiton Surrey KT6 6AW(GB)

(74) Representative: Shindler, Nigel et al,
BATCHELLOR, KIRK & EYLES 2 Pear Tree Court
Farringdon Road
London EC1R 0DS(GB)

(54) Vehicle with sliding roof system.

(57) A convertible vehicle which has a movable rear panel or panels (12, 6) forming the roof and/or rear window. A storage compartment is incorporated in the lid (8) of the luggage compartment (10) and the panels are moved into the storage compartment by an electric drive motor (18) which drives them along tracks (4) by means of Bowden cables (22).

Fig. I.

"Vehicle with Sliding Roof System"

This invention relates to a vehicle having an opening roof and/or rear window, that is to say a vehicle of the so called "convertible" type.

Conventional vehicles with opening roofs are generally of three types, (a) those with collapsible fabric roofs, (b) those with rigid but removable roof panels, and (c) those with sliding panels built into the roof, i.e. so called sun-roofs. All of these have specific disadvantages, the fabric roof being rather inconvenient to open and close, noisy in the closed position and susceptible to wear and tear and vandalism. In addition, it is almost impossible to open or close the roof unless the vehicle is stationary, which is also a problem with roofs of the removable panel type. Traditional convertible arrangements also take a few minutes (typically $2\frac{1}{2}$ to $3\frac{1}{2}$ minutes) to open or close properly. The removable panel type of roof also suffers from the disadvantage that it must either be left behind or stored within a special compartment in the car. Sliding or tilting sunroofs fixed within the normal roof area of a saloon car are most convenient in use, but generally only provide a small roof opening and certainly never provide the same driving sensation as a true convertible.

Accordingly, the present invention provides a vehicle having at least one movable rigid panel forming the roof or rear window, the said panel or panels being retractable into complete concealment in the bodywork of the vehicle. Preferably the panel or panels are retracted into a compartment behind the rear window area. In a "saloon" construction, in which there is a separate luggage compartment behind

-2-

the rear window, the compartment for receiving the said panel or panels is preferably incorporated in the lid of the luggage compartment. Alternatively, in a vehicle of the so called "hatch-back" type, in which there is no separate luggage compartment, the compartment for storing the panels may simply be incorporated in the lower portion of the "hatch", below the window line.

In a further alternative arrangement, the vehicle may be provided with a fixed "rollover bar" structure which includes a compartment for receiving the roof panel.

Preferably, each panel is arranged to run along a pair of tracks arranged along opposite side edges of the top of the vehicle, and may be driven by an electric drive system of the kind commonly used for normal electrically operated sun-roofs.

The roof panel may be made from glass, an acrylic plastics material, or any other suitable transparent or opaque sheet material, and the rear window panel is preferably made from glass or an acrylic plastics material.

One embodiment of the invention will now be described by way of example, with reference to the accompanying drawings in which:

Figure 1 is a diagrammatic side elevation of a vehicle according to the invention;

Figure 2 is a diagrammatic perspective view from above, of part of the vehicle of Figure 1; and

Figures 3, 4, 5 and 6 are views of the vehicle of Figure 1, showing the movable panels in various alternative positions.

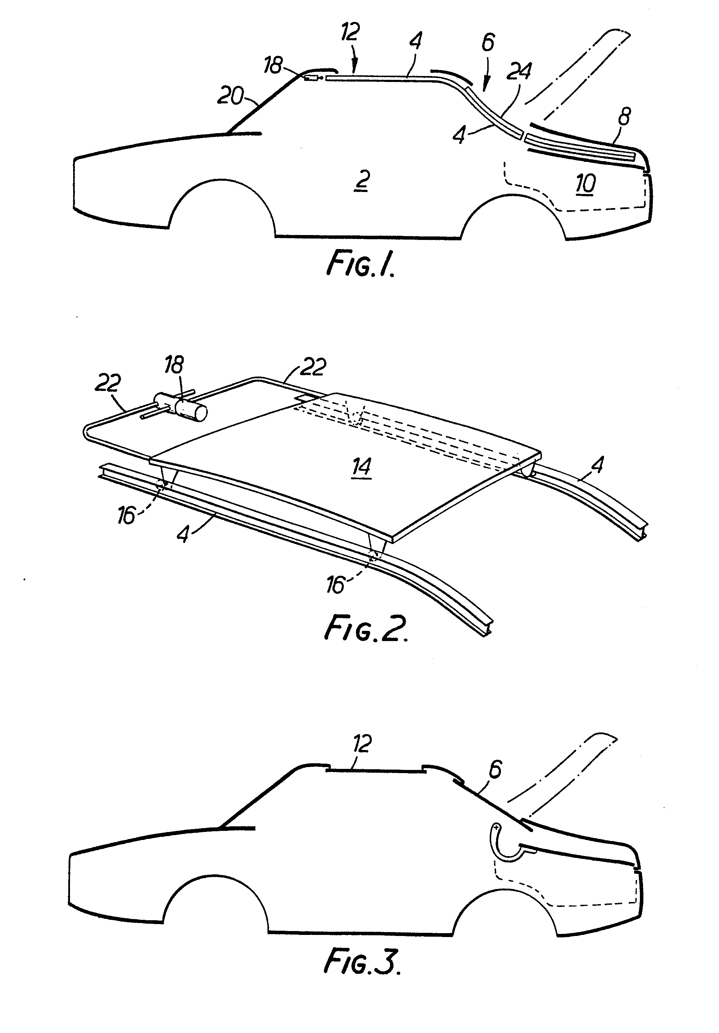

Referring to the drawings, the vehicle 2 of Figure 1 is of the saloon type, and incorporates tracks 4 at each side edge of the roof, which extend

-3-

downwardly past the position of the rear window area 6, into the inside edges of the lid 8 of the luggage compartment 10. In the roof area 12 of the vehicle, a single track is provided at each edge of the roof, and the sliding panel 14 has a wheel 16 at each corner, which engages in the track. An electric motor 18, mounted in the roof of the vehicle above the front window 20, drives the panel 14 along the tracks 4 by means of a conventional drive system including a pair of Bowden cables 22.

At the side edges of the rear window area 6, there is provided a further pair of tracks 24, co-extensive with the tracks 4, so that a transparent rear window panel may be mounted in the rear window position so as to be movable along the tracks 24, whilst still allowing the roof panel 14 to move past the same area. The tracks 24 also extend into the lid 8 of the luggage compartment, so that either the roof panel, or the rear window panel, or both can be retracted into the luggage compartment lid. For this purpose, it will be appreciated that a similar drive mechanism to that for the roof panel 14, will be provided for the rear window panel, consisting of an electric motor and Bowden cables.

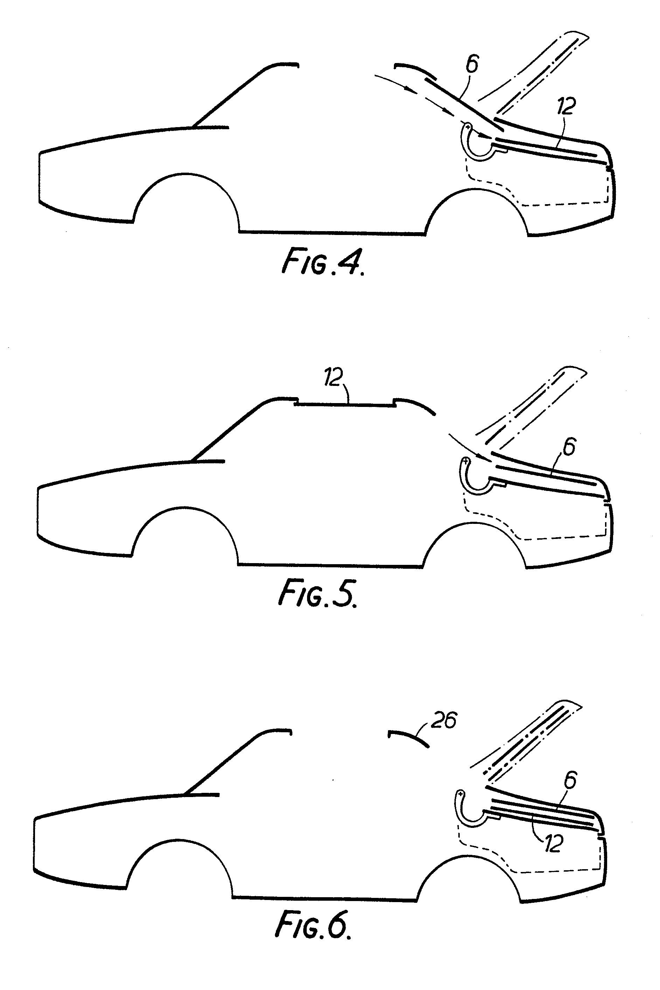

In use, the electric motors are controlled by switches operated by the driver, and the initial positions of the roof panel 12 and rear window panel 6 are shown diagrammatically in Figure 3. Figure 4 shows the arrangement in which the roof panel 12 has been retracted into the lid of the luggage compartment, whilst the rear window panel 6 is left in its normal position, providing a "Targa Top" type of arrangement. Alternatively, only the rear window panel 6 may be retracted into the lid of the luggage compartment, as shown in Figure 5 so as to provide additional ventilation in poor weather, or both of the panels 6 and 12 may be retracted into the lid, as shown in Figure 6, to provide a full "drop-head", effect, leaving only a "rollover bar" structure 26 above the passengers.

The preferred form of the invention thus provides a rigid, durable form of convertible vehicle in which the "conversion" can be achieved rapidly and conveniently even while the vehicle is in motion.

CLAIMS

1.        A vehicle having a passenger compartment including a roof (12) and a rear window (6) and also having at least one movable rigid panel (14) forming a part of said compartment, the said panel being retractable; characterised in that the vehicle further comprises a storage compartment (8) for said panel in a part of the bodywork of the vehicle behind the rear window (6) of said passenger compartment.

2.        A vehicle according to claim 1 which is of the type including a luggage compartment (10) behind said passenger compartment, further characterised in that the said storage compartment is formed in a lid of said luggage compartment.

3.        A vehicle according to claim 1 or claim 2 characterised in that the said panel, or one of the said panels, forms at least a part of the roof of said passenger-compartment.

4.        A vehicle according to any preceding claim further characterised in that the said panel or one of the said panels forms the rear window of said passenger compartment.

5.        A vehicle according to any preceding claim further characterised in that the or each said panel includes followers (16) mounted on tracks (4) extending from a normal closed position of said panel, into the said storage compartment.

0101322

6.        A vehicle according to any preceding claim further characterised by an electric motor (18) connected to said panel or panels by Bowden cables (22) so as to enable said panel or panels to be moved between a closed position and an open position.

0101322

1/2

FIG.1.

FIG.2.

FIG.3.

FIG.4.

FIG.5.

FIG.6.